Europäisches Patentamt

(19) European Patent Office

Office européen des brevets

(11) Numéro de publication : **0 067 751**
**B1**

(12) **FASCICULE DE BREVET EUROPÉEN**

(45) Date de publication du fascicule du brevet :
04.05.88

(21) Numéro de dépôt : **82400980.7**

(22) Date de dépôt : **27.05.82**

(51) Int. Cl.⁴ : **F 16 B 37/00, F 16 B 13/06**

(54) **Dispositif d'implantation d'une vis freinée ou d'un goujon dans un trou borgne.**

(30) Priorité : **29.05.81 FR 8110689**

(43) Date de publication de la demande :
**22.12.82 Bulletin 82/51**

(45) Mention de la délivrance du brevet :
**04.05.88 Bulletin 88/18**

(84) Etats contractants désignés :
**AT BE CH DE FR GB IT LI LU NL SE**

(56) Documents cités :
**CH-A- 483 571**
**FR-A- 1 179 556**
**FR-A- 1 297 330**
**FR-A- 1 416 714**
**FR-A- 2 451 490**
**GB-A- 1 455 507**
**US-A- 2 120 577**
**US-A- 3 163 197**

(73) Titulaire : **SHUR-LOK INTERNATIONAL S.A. Société dite:**
**Rue du Midi 7-9**
**B-4822 Petit-Rechain (BE)**

(72) Inventeur : **Heurteux, Bernard Marc**
**12, rue de l'Union**
**Verviers (BE)**

(74) Mandataire : **Bressand, Georges et al**
**c/o CABINET LAVOIX 2 Place d'Estienne d'Orves**
**F-75441 Paris Cedex 09 (FR)**

Jouve, 18, rue St-Denis, 75001 Paris, France

### Description

La présente invention est relative à un manchon d'assemblage destiné à la fixation d'une vis ou d'un goujon dans un objet massif, notamment en un matériau dur, ce manchon comportant un filetage extérieur adapté à celui d'un trou taraudé dudit objet et des moyens intérieurs pour retenir la vis ou le goujon.

On connaît déjà depuis longtemps des dispositifs pour la fixation de pièces sur des objets en un matériau tendre, tel que de l'aluminium, une matière plastique ou autre et qui permettent d'éviter les détériorations du matériau tendre de l'objet, même en cas de montages et de démontages répétés de la vis de fixation de la pièce.

On a notamment décrit au document FR-A-1 416 714 un dispositif pour ancrer une vis dans un trou taraudé dans un objet en matière tendre, comprenant une douille ayant un filetage externe adapté pour coopérer avec le taraudage du trou de l'objet, et un filetage interne, et une partie d'extrémité dépourvue de filetage externe et présentant des cannelures s'étendant axialement, cette douille étant en une matière dure.

Pour ancrer une vis au moyen de ce dispositif, on visse la douille dans le trou taraudé de l'objet jusqu'à une profondeur telle que la partie non filetée extérieurement de la douille soit entièrement logée dans le trou taraudé au voisinage de l'ouverture de celui-ci. On provoque ensuite une dilatation radiale vers l'extérieur de cette partie au moyen d'un outil pour forcer les cannelures verticales de l'extrémité de la douille à s'interpénétrer avec les filets du trou taraudé.

On a ainsi immobilisé la douille dans le trou taraudé de l'objet et on peut visser dans celle-ci une vis qui peut ensuite être démontée sans provoquer une usure excessive et dangereuse de la matière tendre constituant l'objet.

On a également décrit dans le document FR-A-2 451 490 un dispositif d'un type voisin également adapté pour fixer une vis dans un trou taraudé d'un objet en matière relativement tendre, comprenant un manchon comportant un filetage extérieur adapté à celui du trou taraudé de l'objet et un filetage intérieur adapté à celui d'une vis, comportant à l'une de ses extrémités un prolongement cylindrique dépourvu de filetage et dont le diamètre extérieur est au plus égal au diamètre inférieur du filetage externe du manchon, ce prolongement étant destiné à être déformé par flambage vers l'extérieur pour être bloqué dans les filets correspondants du trou taraudé de l'objet.

Ces dispositifs sont tout à fait appropriés et efficaces pour fixer des vis ou des goujons dans des matières tendres lorsque l'anti-rotation de la douille ou du goujon ne doit pas être importante. Par contre, ces systèmes ne peuvent être utilisés lorsque la matière de l'objet est dure et lorsque la résistance en anti-rotation doit être importante. En outre, notamment en matière de construction aéronautique, il est obligatoire de freiner une vis montée dans un trou taraudé d'un tel objet, ce qui conduit à rechercher un dispositif pour monter des vis ou des goujons dans des objets en un matériau dur.

Le document CH-A-483571 décrit un dispositif pour fixer un support sur un mur, dans lequel un tube lisse fendu longitudinalement est introduit dans un trou d'un mur et comporte à son extrémité située au fond du trou une partie alésée à paroi relativement mince. Une vis est introduite dans un alésage central du corps et dans un trou fileté d'un corps cylindrique ayant un diamètre un peu supérieur à celui de ladite partie alésée. Lorsqu'on fait tourner la vis au moyen de sa tête, située à l'extérieur, en maintenant le tube contre toute rotation, le corps cylindrique pénètre dans ladite partie alésée et la dilate dans le trou.

Dans ce dispositif, seule l'extrémité du tube est dilatée, le reste de ce tube étant inactif, et sa surface externe lisse tend à tourner dans le trou dans lequel elle ne joue aucun rôle en raison de son diamètre, inférieur à celui du trou. En outre, ce dispositif ne peut être utilisé pour résoudre le problème de l'ancrage d'un goujon ou d'une vis freinée dans un trou borgne d'un corps en métal dur.

Le brevet FR-A-1 179 556 décrit un dispositif d'implantation d'une vis ou d'un goujon dans un trou lisse. Ce dispositif comprend un écrou destiné à coopérer avec une vis ou un goujon pour le tirer hors du trou avec un organe de dilatation en prenant appui sur la surface dans laquelle le trou a été percé.

Enfin, le brevet US-A-2 120 577 décrit un dispositif destiné à être mis en place dans un trou d'un mur et comportant une douille qui est enfoncée à force à coups de marteau et se déforme à ce moment en s'engageant télescopiquement pardessus une seconde douille taraudée ayant une extrémité plus large.

L'invention a en conséquence pour but de réaliser un dispositif permettant l'implantation d'une vis ou d'un goujon dans un trou taraudé d'un objet, par exemple d'un carter en un métal dur, présentant des propriétés d'anti-rotation importantes et indépendantes de la dureté du matériau de l'objet.

L'invention a pour objet à cet effet un dispositif d'implantation d'une vis ou d'un goujon dans un trou borgne taraudé d'un corps en métal dur, du type dans lequel la vis ou le goujon est retenu dans le trou par l'intermédiaire d'une douille ou d'un manchon ayant un alésage axial et une chambre déformable, au moyen d'un organe de dilatation adapté pour déformer ladite chambre dans le trou, comprenant un écrou adapté pour coopérer avec la vis ou le goujon pour le tirer hors du trou avec l'organe de dilatation en prenant appui sur le corps, caractérisé en ce que ledit organe de dilatation comporte un corps de révolution ayant une portion d'extrémité à peu près cylindrique de diamètre légèrement supérieur au diamètre interne de ladite chambre, une portion de forme tronconique adjacente à ladite portion cylindrique, raccordée à celle-ci par sa grande base et dont la petite base a un diamètre à peu près égal au diamètre interne de ladite chambre, et une portion de diamètre réduit délimitant avec ledit corps un épaulement, ladite douille comporte un filetage externe adapté pour coopérer avec le taraudage du trou.

D'autres caractéristiques et avantages de l'invention apparaîtront au cours de la description qui va suivre faite en se référant aux dessins annexés donnés uniquement à titre d'exemple et dans lesquels :

la figure 1 est une vue en élévation latérale éclatée et en coupe partielle montrant les éléments d'un dispositif suivant l'invention pour l'implantation d'une vis freinée ;

la figure 2 est une vue en élévation latérale et en coupe partielle montrant le procédé de mise en place de l'organe de dilatation dans la chambre de la douille ;

la figure 3 est une vue en élévation latérale et en coupe partielle montrant la douille en place ;

la figure 4 est une vue en élévation latérale et avec arrachement partiel d'une variante du dispositif suivant l'invention pour la pose d'un goujon dans un trou taraudé.

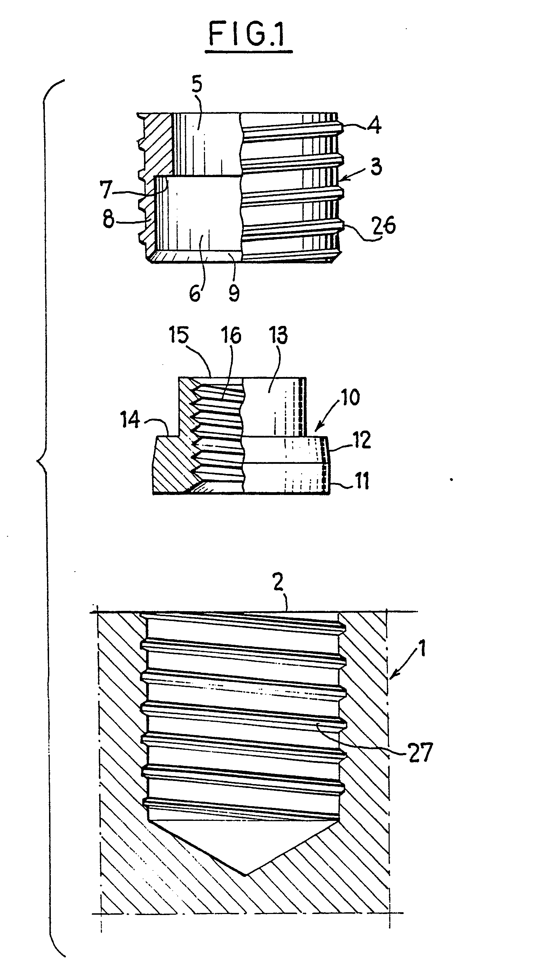

En se référant à la figure 1, on a désigné par 1 un élément qui peut être constitué par le bloc d'un moteur, désigné dans son ensemble par la référence 1.

Dans cet élément 1 est percé un trou borgne 2 qui est taraudé.

Le dispositif suivant l'invention permettant l'implantation d'une vis freinée dans le bloc 1 comprend une douille cylindrique creuse 3 par exemple en acier, comportant un filetage externe 4, un alésage axial 5 s'étendant sur une partie de sa longueur, et une chambre 6 formée par un contre-alésage, ayant un diamètre interne supérieur à celui de l'alésage 5 et délimitant avec ce dernier un épaulement interne 7.

La chambre 6 comporte une paroi 8 d'épaisseur réduite, relativement déformable dont la surface interne est chanfreinée comme représenté en 9 sur la totalité de sa périphérie.

Le dispositif comprend également un organe de dilatation désigné dans son ensemble par la référence 10, comprenant un corps massif circulaire présentant une portion d'extrémité 11 cylindrique ayant un diamètre externe légèrement supérieur au diamètre interne de la chambre 6 de la douille 3, une portion tronconique 12 reliée par sa grande base à la partie cylindrique 11 et dont la petite base présente un diamètre au moins égal au diamètre interne de la chambre 6 et délimite avec une partie 13 de diamètre réduit un épaulement annulaire radial 14. L'organe 10 comporte un alésage 15 et un filetage interne 16.

L'extrémité de la partie 13 de diamètre réduit est déformée elliptiquement de façon connue afin de constituer un frein de filet.

Pour mettre le dispositif en place, on utilise un boulon classique 16 de diamètre approprié pour être vissé dans l'alésage fileté de l'organe de dilatation 10, et un écrou 17.

On visse le boulon 16 à travers l'écrou 17 sur presque toute sa longueur, on introduit l'extrémité du boulon 16 à travers l'alésage 5 de la douille 3 de façon que l'extrémité du boulon fasse saillie au-delà du bord chanfreiné 9 de la douille, et on visse l'extrémité du boulon dans l'organe de dilatation 10 par l'extrémité de la partie 13 de celui-ci.

On introduit alors l'extrémité du boulon portant l'organe 10 dans le trou taraudé 2 de l'élément 1 et on visse la douille 3 dans ce trou jusqu'à ce que le bord de la douille soit de niveau avec la surface externe de l'élément 1.

On tire alors le boulon pour ramener le bord de l'élément 14 en contact avec la partie chanfreinée 9 de la douille 3, et on fait tourner l'écrou 17 en maintenant la tête du boulon 16 jusqu'à amener cet écrou au contact de la surface externe de l'élément 1.

On continue alors de faire tourner l'écrou 17 à force en prenant appui sur le corps 1 et en maintenant la tête du boulon 16 de façon à tirer celui-ci vers l'extérieur.

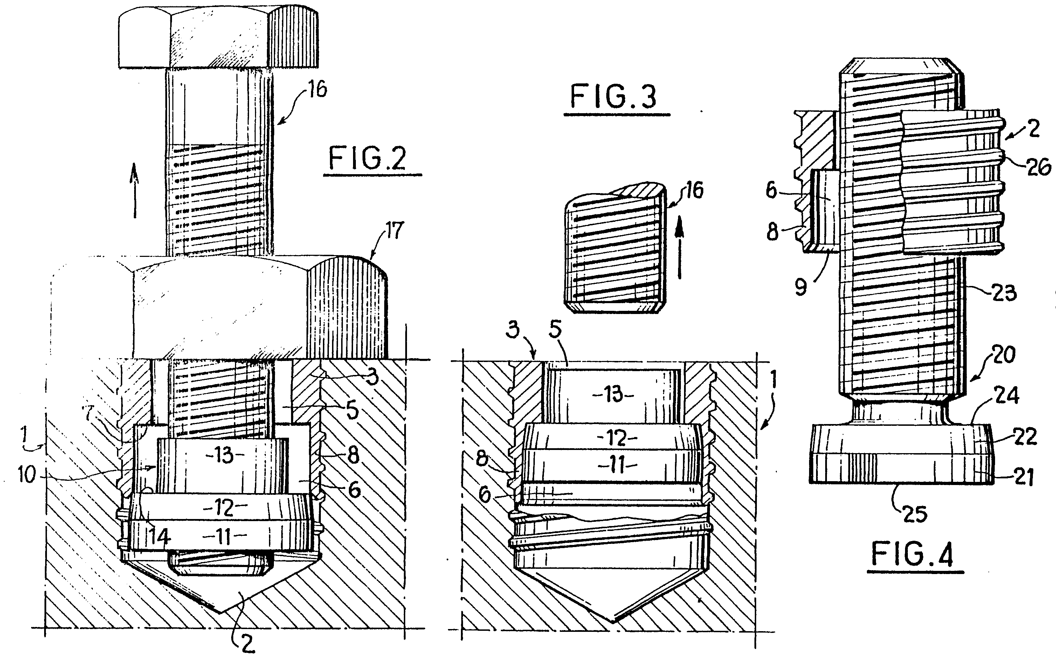

Le déplacement du boulon entraîne la partie tronconique 12 et la force à pénétrer dans la chambre 6 en glissant sur la partie chanfreinée 9 et amorçant ainsi un écrasement et une dilatation de la paroi mince 8 de la chambre, cette dilatation étant poursuivie par la pénétration de la portion 11 dans cette chambre jusqu'au moment où l'épaulement 14 de la portion 12 entre en contact avec l'épaulement interne 7 de la douille 3 comme représenté à la figure 3.

L'organe de dilatation 10 est alors fermement bloqué à l'intérieur de la chambre 6 dont il a écrasé et déformé la paroi 8 contre la surface interne du trou taraudé 2. On peut alors dévisser complètement le boulon 16 et le dispositif est prêt à recevoir une vis qui est auto-freinée par la déformation elliptique de l'extrémité de la portion 13 de l'organe de dilatation.

Bien entendu, le diamètre externe de la portion 13 est approprié pour que celle-ci puisse pénétrer à l'intérieur de l'alésage 5 de la douille 3.

On remarquera que dans la position représentée à la figure 3, si on fait tourner la vis 16 seule en immobilisant l'écrou 17, l'extrémité de la vis vient alors en contact avec le fond du trou 2. Si on continue ce mouvement, l'organe de dilatation est encore tiré vers le haut avec son épaulement 14 en contact avec l'épaulement 7, provoquant l'application d'une force axiale sur la partie supérieure de la douille 3, tendant à déformer celle-ci en flambage contre l'écrou 17 et augmentant encore, par conséquent, l'adhérence de la douille dans le trou.

On peut alors retirer la vis, la douille 3 restant solidement ancrée dans le trou, avec l'organe 10.

On a représenté à la figure 4 une variante de l'organe de dilatation, désignée dans son ensemble par la référence 20 dans laquelle les portions 21, 22 qui sont identiques aux portions 11 et 12, sont massives, la portion 23 de diamètre réduit étant constituée par une tige filetée dont la longueur est supérieure à la profondeur du trou borgne 2 et dont le diamètre externe est adapté pour lui permettre de s'étendre à travers la partie 5 de l'alésage de la douille 3.

On comprend que la tige filetée 23 de l'organe de dilatation 20 constitue un goujon qui peut être implanté dans l'élément 1 de la même manière que dans l'exemple représenté à la figure 2.

En effet, pour implanter ce goujon, on introduit tout d'abord les portions 21, 22 dans le fond du trou 2, on visse ensuite la douille 3 dans le trou 2, puis on visse l'écrou 17 sur l'extrémité de la tige filetée 23 jusqu'à ce que cet écrou vienne en contact avec la surface externe du corps 1. On tire la tige filetée 23 vers l'extérieur de façon à provoquer un début de coincement de la portion 22 sur la partie chanfreinée 9 de la douille et on fait tourner l'écrou pour tirer la tige filetée 23 vers l'intérieur et faire pénétrer la portion 22 dans la chambre 6 de la même façon que décrit en référence à la figure 2, jusqu'à ce que l'épaulement 24 soit entré en contact avec l'épaulement interne 7 de la douille. A ce moment, l'organe de dilatation dont la portion 23 constitue un goujon se trouve fermement bloqué à l'intérieur de la douille dans le trou 2 de l'élément 1.

Dans ce mode de réalisation également, la partie supérieure de la douille 3 se trouve soumise à une force de compression axiale entre l'écrou 17 et l'épaulement 24.

Dans les deux exemples décrits, une déformation de la partie supérieure de la douille 3 reste acquise même après l'enlèvement de l'écrou 17, et on remarque que la totalité de la surface externe de la douille participe à l'effet de coincement contre la paroi du trou 2.

Si on le désire, il peut être prévu sur la périphérie de la portion 11 ou 21 des cannelures axiales parallèles comme représentées en 25 à la figure 4, ces cannelures étant destinées à mordre dans la surface interne de la chambre 6 afin de renforcer encore les propriétés anti-rotation de l'organe de dilatation.

De préférence, le boulon 16 utilisé présente un filetage dont le diamètre externe hors tout est réduit par rapport au filetage de l'organe de dilatation 10 de manière à pouvoir passer aisément dans le frein de filet de la portion 13, dans l'exemple de la figure 1.

Suivant une autre caractéristique de l'invention, le filetage externe 4 de la douille 3 présente un profil tronqué comme représenté notamment aux figures 1 et 4, le sommet des filets étant plat comme indiqué en 26. La forme particulière de ce filetage correspond à celle du taraudage 27 du trou 2, qui peut être réalisée en utilisant un taraud classique mais en prévoyant le trou de perçage avant taraudage légèrement surdimensionné par rapport à celui utilisé pour un filetage standard.

La forme particulière de ce filetage 26 est rendue nécessaire par le fait que la paroi 8 de la chambre 6 présente une épaisseur relativement faible afin d'être plus aisément déformable. En conséquence, pour que ce filetage présente une résistance suffisante, les filets ont à la base une largeur qui correspond à une hauteur qui serait normalement supérieure à l'épaisseur de la paroi 8 entre les filets. Pour cette raison, ces filets ont un sommet tronqué.

Il ressort de ce qui précède que l'invention fournit un dispositif d'implantation d'une vis auto-freinée ou d'un goujon dans un trou borgne taraudé d'un objet en matériau dur tel que par exemple une culasse ou un bloc moteur en acier qui présente des propriétés d'anti-rotation élevées et qui permet un ancrage solide et sûr d'une façon simple avec des moyens peu coûteux.

En outre, bien que ce dispositif soit particulièrement approprié pour être utilisé dans des objets en matériau dur, il est bien entendu également utilisable dans des objets en matériau tendre. Dans ce dernier cas, cependant, il convient de ne pas exercer un effort de serrage trop élevé sur la vis ou le goujon afin d'éviter l'apparition de fissures dans le corps 1 autour du trou 2, en raison de la force considérable de déformation pouvant être appliquée par la douille sur le corps, radialement vers l'extérieur.

**Revendications**

1. Dispositif d'implantation d'une vis ou d'un goujon dans un trou borgne taraudé d'un corps en métal dur, du type dans lequel la vis ou le goujon est retenu dans le trou par l'intermédiaire d'une douille ou d'un manchon ayant un alésage axial et une chambre déformable, au moyen d'un organe de dilatation adapté pour déformer ladite chambre dans le trou, comprenant un écrou (17) adapté pour coopérer avec la vis ou le goujon pour le tirer hors du trou avec l'organe de dilatation, en prenant appui sur le corps, caractérisé en ce que ledit organe de dilatation (10, 20) comporte un corps de révolution ayant une portion (12) de forme tronconique destinée à la pénétration de l'organe de dilatation dans ladite chambre par écrasement de la paroi mince (8) de celle-ci, la petite base de ladite portion tronconique ayant un diamètre à peu près égal au diamètre interne de ladite chambre, une portion d'extrémité (11) à peu près cylindrique, de diamètre légèrement supérieur au diamètre interne de la chambre (6), raccordée à la portion tronconique (12) par la grande base de celle-ci et destinée au blocage définitif de l'organe de dilatation contre la paroi (8) de ladite chambre, et une portion (13) de diamètre réduit délimitant avec ledit corps un épaulement (14, 24) et en ce que ladite douille (3) comporte un filetage externe (26) adapté pour coopérer avec le taraudage du trou.

2. Dispositif suivant la revendication 1, caractérisé en ce que ledit organe de dilatation (10, 20) est un écrou, ladite portion de diamètre réduit (13) étant déformée elliptiquement pour former un frein de filet.

3. Dispositif suivant la revendication 1, caractérisé en ce que ladite portion de diamètre réduit (23) est une tige filetée.

4. Dispositif suivant l'une quelconque des revendications 2 et 3, caractérisé en ce que l'alésage axial de la douille ou manchon (3) présente une paroi lisse et délimite avec ladite chambre (6) un épaulement radial interne (7), ladite partie de diamètre réduit (23) a un diamètre externe approprié pour lui permettre de pénétrer dans l'alésage (5) de la portion (13) de diamètre réduit de la douille (3) à peu près sans jeu.

5. Dispositif suivant la revendication 1, caractérisé en ce que le bord périphérique interne de la chambre (6) comporte une partie chanfreinée (9).

6. Dispositif suivant la revendication 1, caractérisé en ce que le filetage externe (4) de la douille (3) présente en section un profil tronqué à sommet plat, dont la largeur à la base est supérieure à la hauteur, les filets de taraudage (27) du trou du corps ayant en section une forme correspondante.

7. Dispositif suivant l'une quelconque des revendications 2 ou 3, caractérisé en ce que ladite partie cylindrique (11, 21) de l'organe de dilatation comporte de fines cannelures (25) axiales.


## Claims

1. Device for implanting a screw or a bolt in a blind tapped hole of a body made of hard metal, of the type wherein the screw or bolt is held in the hole by the intermediary of a socket or sleeve having an axial borehole and a deformable chamber, by means of an expansion member adapted to deform said chamber in the hole ; comprising a nut (17) adapted to co-operate with the screw or bolt in order to pull it out of the hole with the expansion member, whilst resting on the body, characterised in that the expansion member (10, 20) has a body of revolution having a truncated cone-shaped portion (12) intended to effect penetration of the expansion member into said chamber by crushing of the thin wall (8) of the latter, the diameter of the small end of the truncated cone-shaped portion being substantially equal to the internal diameter of said chamber, a substantially cylindrical end portion (11) the diameter of which is slightly greater than the internal diameter of the chamber (6), being connected to the truncated cone-shaped portion (12) by way of the large end thereof and being intended for permanently locking the expansion member against the wall (8) of said chamber, and a portion (13) of reduced diameter defining with said body a shoulder (14, 24), and in that the socket (3) has an external thread (26) adapted to co-operate with the tapping of the hole.

2. Device according to claim 1, characterised in that the expansion member (10, 20) is a nut, the portion of reduced diameter (13) being deformed elliptically to form a thread brake.

3. Device according to claim 1, characterised in that the portion of reduced diameter (23) is a threaded rod.

4. Device according to any of claims 2 and 3, characterised in that the axial bore of the socket or sleeve (3) has a smooth wall and defines, with said chamber (6), an inner radial shoulder (7), said portion of reduced diameter (23) has an external diameter suitable to allow it to penetrate into the bore (5) of the reduced-diameter portion (13) of the socket (3) with virtually no clearance.

5. Device according to claim 1, characterised in that the inner peripheral edge of the chamber (6) has a chamfered part (9).

6. Device according to claim 1, characterised in that the external thread (4) of the socket (3) in cross section has a truncated outline with a flat top, the width of the base being greater than the height, whilst the tapping threads (27) of the hole in the body are correspondingly shaped in cross section.

7. Device according to any of claims 2 and 3, characterised in that the cylindrical part (11, 21) of the expansion member has fine axial grooves (25).


## Patentansprüche

1. Vorrichtung zur Anbringung einer Schraube oder eines Bolzens in einer gewindeversehenen Sackbohrung eines Körpers aus Hartmetall von dem Typ, in dem die Schraube oder der Bolzen in der Bohrung mittels einer Buchse oder einer Hülse, die eine axiale Bohrung und eine deformierbare Kammer besitzt, mittels eines Ausdehnorgans zurückgehalten ist, das zur Deformation der Kammer in der Bohrung angepaßt ist, aufweisend eine zum Zusammenwirken mit der Schraube oder dem Bolzen angepaßte Mutter (17), um ihn aus der Bohrung mit dem Ausdehnorgan zu ziehen, wobei auf dem Körper eine Abstützung vorgenommen wird, dadurch gekennzeichnet, daß das Ausdehnorgan (10, 20) einen Drehkörper, der einen Abschnitt (12) mit Kegelstumpfform besitzt, der für das Eindringen des Ausdehnorgans in die Kammer durch Druckverformung von deren dünner Wand (8) bestimmt ist, wobei die kleine Basis des kegelstumpfförmigen Abschnittes einen Durchmesser fast gleich dem Innendurchmesser der Kammer besitzt, einen fast zylindrischen Endabschnitt (11) mit etwas größerem Durchmesser als der Innendurchmesser der Kammer (6), der mit dem kegelstumpfförmigen Abschnitt (12) durch dessen große Basis verbunden ist und zur definititven Arretierung des Ausdehnorgans gegen die Wand (8) der Kammer bestimmt ist, und einen Abschnitt (13) mit herabgesetztem Durchmesser umfaßt, der mit dem Körper eine Schulter (14, 24) begrenzt, und daß die Buchse (3) ein Außengewinde (26) umfaßt, das zum Zusammenwirken mit dem Gewinde der Bohrung angepaßt ist.

2. Vorrichtung nach Anspruch 1, dadurch gekennzeichnet, daß das Ausdehnorgan (10, 20) eine Mutter ist, wobei der Abschnitt mit herabgesetztem Durchmesser (13) elliptisch deformiert ist, um eine Gewindesicherung zu bilden.

3. Vorrichtung nach Anspruch 1, dadurch gekennzeichnet, daß der Abschnitt mit herabgesetztem Durchmesser (23) eine Gewindestange ist.

4. Vorrichtung nach einem beliebigen der Ansprüche 2 und 3, dadurch gekennzeichnet, daß die axiale Bohrung der Buchse oder Hülse (3) eine glatte Wand aufweist und mit der Kammer (6) eine radiale Innenschulter (7) begrenzt, der Teil des herabgesetzten Durchmessers (23) einen geeigneten Außendurchmesser besitzt, um es ihm zu gestatten, in die Bohrung (5) des Abschnittes (13) mit herabgesetztem Durchmesser der Buchse (3) fast ohne Spiel einzudringen.

5. Vorrichtung nach Anspruch 1, dadurch gekennzeichnet, daß der periphere Innenrand der Kammer (6) einen abgefasten Teil (9) umfaßt.

6. Vorrichtung nach Anspruch 1, dadurch gekennzeichnet, daß das Außengewinde (4) der Buchse (3) im Schnitt ein abgeschnittenes Profil mit ebenem Scheitel aufweist, dessen Breite an der Basis größer als die Höhe ist, wobei die Gewindegänge (27) der Bohrung des Körpers im Schnitt eine entsprechende Form besitzen.

7. Vorrichtung nach einem beliebigen der Ansprüche 2 oder 3, dadurch gekennzeichnet, daß der zylindrische Teil (11, 21) des Ausdehnorgans feine axiale Rillen (25) umfaßt.

# FIG.1

FIG.2

FIG.3

FIG.4

0 067 751